# EUROPEAN PATENT SPECIFICATION

(11) **EP 2 303 617 B1**
(45) Date of publication and mention of the grant of the patent: **29.05.2013**
(21) Application number: 09800131.6
(22) Date of filing: 23.07.2009
(51) Int. Cl.: B60H 1/32, F25B 40/00, F28D 7/10, F28F 1/12

(54) **FLUIDIC ASSEMBLY FOR AN AIR CONDITIONING CIRCUIT WITH A HEAT EXCHANGER**
FLUIDISCHE ANORDNUNG FÜR EINE KLIMAANLAGENSCHALTUNG MIT EINEM WÄRMETAUSCHER
ENSEMBLE FLUIDIQUE POUR UN CIRCUIT DE CONDITIONNEMENT D'AIR A ECHANGEUR THERMIQUE

(30) Priority: 23.07.2008 IT TO20080568
(43) Date of publication of application: 06.04.2011
(73) Proprietor: DYTECH - Dynamic Fluid Technologies S.p.A., 10123 Torino (IT)
(72) Inventor: ZANARDI, Mariofelice, I-10123 Torino (IT); CASELLA, Luigi, I-10135 Torino (IT)
(74) Representative: Mola, Edoardo
(86) International application number: PCT/IB2009/006337
(87) International publication number: WO 2010/010450

(56) References cited:
- EP-A- 1 479 995
- EP-A- 1 647 792
- DE-A1- 19 944 950
- US-A- 4 773 234

## Description

### TECHNICAL FIELD

The present invention relates to a fluidic assembly comprising a heat exchanger for an air conditioning circuit of a motor vehicle.

### BACKGROUND ART

An air conditioning circuit of a vehicle comprises a compressor, a condenser, an expansion system, an evaporator and a fluidic assembly for connecting the previously mentioned components to one another.

In particular, the evaporator is crossed by an air current which is fed by specific air pipes into the passenger compartment and the compressor may be arranged either in the front or in the back of the engine compartment.

The compressor supplies work to take a fluid from a relatively low temperature and pressure, e.g. 2°C and 2 bars respectively, to a higher pressure and-temperature, e.g. 80°C and 15 bars.

The fluid gives heat to the external environment in the condenser and is directed towards the evaporator, an expansion valve being interposed and which causes a pressure drop until the fluid evaporates in the evaporator subtracting heat from the air flow which crosses it and which is conveyed into the passenger compartment.

Downstream of the evaporator, the compressor must supply work to the fluid equal to the enthalpy between suction and delivery. In order to make the refrigerating cycle more efficient and reduce polluting emissions, it is known to include a heat exchanger in which the fluid exiting from the evaporator is heated by the fluid exiting from the condenser. Thereby, the fluid aspirated by the compressor has a higher pressure and temperature, and both the enthalpy and consequently the work of the compressor decrease.

In particular, heat exchangers are known in which the low pressure fluid pipe is concentric to the high pressure fluid pipe. Such an exchanger comprises an extruded aluminum tube.

The known exchanger requires specifically designed fittings to connect an extruded tube defining pipes which are concentric with the other components of the circuit. This, in combination with the tube being obtained by extrusion, implies relatively high manufacturing costs of the heat exchanger.

Furthermore, the concentric pipes easily fit an air conditioning circuit in which the compressor is mounted in frontal position in the engine compartment. Indeed, in this case, for needs of layout, the high and low pressure tubes are arranged side-by-side.

However, the compressor may also be mounted in a rear part of the engine and, in this case, the high and low pressure pipes are not arranged side-by-side, so that the known exchanger either cannot be used or needs additional connection tubing.

In the air conditioning circuits, it is further known to use a reactive capacitance silencer defined by an expansion chamber. The expansion chamber is a capacity normally inserted on the low pressure line upstream of the compressor suction to adjust the gas flow entering the compressor. The noise of the latter is so reduced.

When the compressor is arranged behind the motor, the silencer also requires dedicated connections and brings about layout problems.

A known exchanger may have labyrinths therein, which are defined by soundproofing and/or dissipating fillers, for example.

EP-A-1479995 discloses a fluidic assembly according to the preamble of claim 1.

### DISCLOSURE OF INVENTION

It is the object of the present invention to provide a fluidic assembly for an air conditioning circuit provided with a heat exchanger which is free from the above-specified drawbacks.

The object of the present invention is achieved by a fluidic assembly according to claim 1.

### BRIEF DESCRIPTION OF THE DRAWINGS

For a better understanding of the present invention, it will now be further described with reference to the accompanying figures, in particular:
- figure 1 is a perspective view of a fluidic assembly according to the present invention;
- figure 2 is a side view of a component in figure 1;
- figure 3 is a front view of figure 2;
- figure 4 is a section taken along line IV-IV in figure 3; and
- figure 5 is a perspective view of a fluidic assembly according to a further embodiment of the present invention.

### BEST MODE FOR CARRYING OUT THE INVENTION

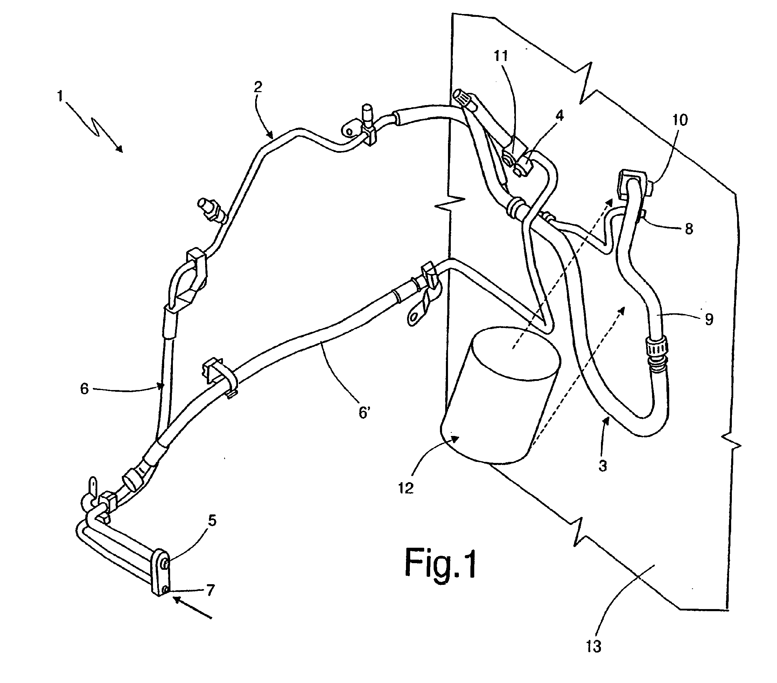

In figure 1, numeral 1 shows as a whole a fluidic assembly for an air conditioning system of a motor vehicle, comprising a high pressure line 2 for feeding a refrigerating fluid between the delivery of a compressor and an expansion valve, and a low pressure line 3 to feed a refrigerating fluid from the expansion valve to the compressor suction.

In particular, the high pressure line 2 comprises metal and rubber pipes mounted in series, a fitting 4 adapted to be connected to the delivery of a compressor, a fitting 5 connected to the inlet of a condenser and a tube 6' between the fittings 4 and 5. Furthermore, the high pressure line 2 comprises a pipe 6 for connecting the condenser to an expansion valve (not shown). The pipe 6 comprises a fitting 7 adapted to be connected to the outlet of the condenser and a fitting 8 adapted to be connected to the expansion valve.

The low pressure line 3 comprises a pipe 9 having a fitting 10 adapted to be connected to the outlet of an evaporator (not shown) and a fitting 11 adapted to be connected to an inlet of the compressor.

The pipes of lines 2, 3 comprise at least one layer of a barrier material for preventing the permeation of the normally very volatile refrigerating fluid. For example, the material may be aluminum or a polyamide 6.10. In the case of an carbon dioxide system, the tubing is made of steel.

According to the present invention, the fluidic assembly 1 comprises an exchanger-silencer assembly 12 mounted on the fire-wall 13 (only outlined in figure 1) and arranged close to the fittings 8 and 10.

In particular, the exchanger-silencer assembly 12 allows both to decrease the pulses of the refrigerating fluid in the gaseous state, which cause undesired noises, and to heat the refrigerating fluid in the gaseous state itself to decrease the enthalpy between the compressor suction and delivery.

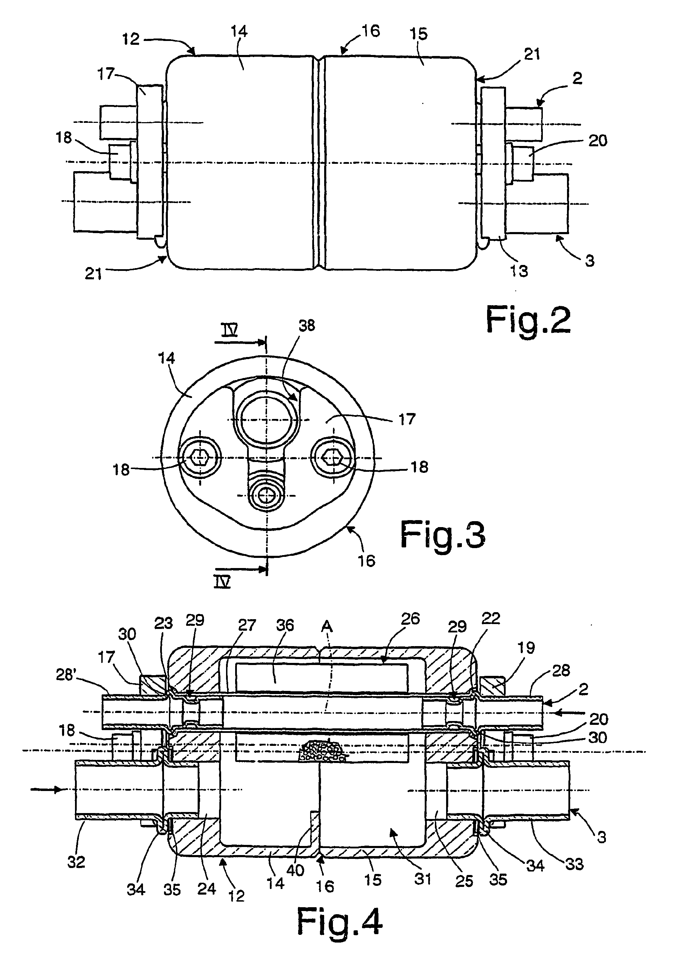

Figures 2 and 3 show the exchanger-silencer assembly 12 which comprises first and second half-shells 14, 15 joined by means of a gas-tight welding along a respective butt edge, e.g. TIG welding, to form a casing 16, a first connection flange 17 firmly connected, e.g. by means of a pair of screws 18, to the half-shell 14, and a second connection flange 19 firmly connected, e.g. by means of a pair of screws 20, to the half-shell 15.

In particular, each half-shell 14, 15 is cup-shaped having a flat face 21, and the flanges 17, 19 are also flat and applied to the respective faces 21. The half-shells 14, 15 are preferably identical and made by impact extrusion processing.

Figure 4 shows the inner structure of the exchanger-silencer assembly 12.

The casing 16 defines an inlet 22 and an outlet 23 for the high pressure line 2, and an inlet 24 and an outlet 25 for the low pressure line 3.

The exchanger-silencer assembly 12 comprises a radiating body 26 connected between the inlet 22 and the outlet 23. The inlet 22 and the outlet 23 preferably define a flare and the radiating body 26 comprises a metal tube 27, the end edges of which are widened and fluid-tightly welded onto respective flares.

According to an embodiment, the high pressure line 2 is fluidically connected to the radiating body 26 by means of an inlet portion 28 and an outlet portion 28'. The inlet and outlet portions 28, 28' are preferably identical and only the inlet portion will be described hereinafter for conciseness.

In particular, the inlet portion 28 defines a seat 29 for a sealing ring (not shown), and a bead 30 which is clamped against the welded edge of the tube 27 by the flange 19 by means of screws 20. The sealing ring prevents leakage of refrigerating fluid from between the tube 27 and the high pressure line 2, and the weldings between the tube 28 and the casing 16 ensure that the refrigerating fluid of the high pressure line 2 cannot escape outwards.

The low pressure line 3 is connected to the casing 16 by means of an inlet portion 32 and an outlet portion 33. The inlet and outlet portions 32, 33' are preferably identical and only the inlet portion will be described hereinafter for conciseness.

In particular, the inlet portion 32 defines a bead 34 which rests on a spring washer 35 substantially parallel to the flat face 21 and defining a front seal for the refrigerating fluid. The bead 34 and the spring washer 35 are pressed by the flange 17 and the screws 18 so as to form a rigid fluid-tight connection and to avoid the refrigerating fluid in the gaseous state from being dispersed into the external environment.

In a preferred embodiment, the flanges 17, 19 define respective diametrical grooves 38 (one of which is illustrated in figure 3) radially open so as to be mountable after the exchanger-silencer assembly 12 has been connected to the lines 2, 3.

The flanges 17, 19 preferably consist of a flat plate for shearing, the plate having recesses for correctly accommodating the upsetting parts of the tubing. In particular, the beads 30 have an axial dimension different from that of the beads 34 because they are made on tubes of different thickness. The presence of recesses thus allows to recover such a difference of size and keep the flange 17, 19 substantially flat to ensure the correct operation of the spring washers 35. Thereby, each flange 17, 19 simultaneously connects two respective portions 28', 32 and 28, 33.

According to a preferred embodiment of the present invention, the radiating body 26 comprises a plurality of radial ridges 36 diagrammatically shown in figure 4. The radial ridges 36 increase the heat exchanging surface between the tube 27 and the refrigerating fluid within the chamber 31. The radial ridges 36 preferably comprise metal wires radially arranged and glued onto the tube 27.

The exchanger-silencer 12 is mounted as follows.

The radiating body 26 is inserted into the half-shells 14, 15 and the latter are welded together.

The end edges of the tube 27 are then widened to adhere to the respective flares of inlet 22 and outlet 23, and the edges are also welded.

Finally, the exchanger-silencer assembly 12 is mounted to the high and low pressure lines 2, 3 as previously described by using the flanges 17, 19.

The advantages of the fluidic assembly made according to the present invention are apparent from the description provided with reference to the accompanying figures.

The low pressure line 3 defines the chamber 31 within which the refrigerating fluid in the gaseous state expands and is heated by the means of the radiating body 26. The chamber 31 further defines a capacity which damps the pressure pulses. In particular, such an effect is increased by the chamber 31 accommodating the radiating element 26. This indeed causes a labyrinth effect along the refrigerating fluid path. Therefore, an air conditioning circuit provided with the exchanger-silencer assembly 12 does not require the presence of a further silencer and integrates two functions in a single component.

In particular, to define an accumulation volume, the chamber 31 has a minimum cross dimension larger than the diameter of the inlet and/or outlet portion 32, 33.

The high pressure line 2 may be connected to the exchanger-silencer assembly 12 by means of connections normally used in air conditioning circuits, and the costs are therefore reduced and the reliability already proven.

The exchanger-silencer assembly 12 may be mounted on systems having a front compressor and on those having a rear compressor (as that shown in figure 1).

It is finally apparent that changes and variations may be made to the present invention without departing from the scope of protection defined by the appended claims.

For example, in addition to a circular cross section, the casing 16 may also have an elliptical section to save space when it is mounted on the fire-wall.

The two half-shells 14, 15 may be mounted on a through tube, on which the radial ridges 36 have been applied in advance. The shells 14, 15 may surround the ridges 36 and then be welded to each other and to the through tube at the ports 22, 23. Thereby, the connections made by the inlet and outlet portions 28, 28' may be avoided, the costs may be further reduced and an optimal sealing may be ensured.

In order to increase the heat exchange efficiency, the shells 14, 15 may define partitions which extend the flow of the refrigerating liquid in the gaseous state flowing from inlet 24 to outlet 25, such as for example partition 40 in figure 4.

Furthermore, the inlet and outlet portions 32, 33 may be coaxial, as shown in figure 4, or misaligned. Even in the latter case, the path of the refrigerating fluid within the chamber 31 is extended. Preferably, the portions 32, 33 are on opposite parts of a plane crossing an axis A of the tube 27.

The flanges 17, 19 may be made by shearing or die-casting.

The exchanger-silencer assembly 12 may also be mounted in other positions, i.e. on'a side member.

The exchanger-silencer assembly 12 may be arranged either between the tube 6' comprised between the fittings 4 and 5, i.e. between the compressor delivery and the condenser inlet, and the pipe 9, or be connected to another high temperature fluid source, e.g. the cooling water.

Furthermore, the half-shells 14, 15 and/or the tube 27 and/or the radial ridges 36 may be glued by means of a structural sealing adhesive instead of being welded. Thereby, an excessive heat supply to the components during the manufacturing process may be avoided and the sealing needed to prevent leakages of refrigerating fluid is kept in all cases.

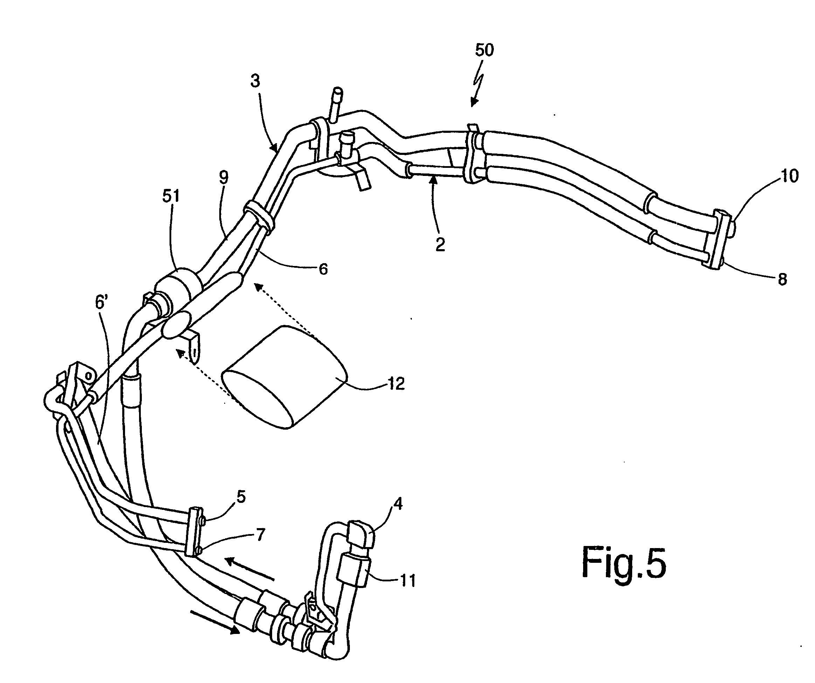

Figure 5 shows a second fluidic assembly 50 for an air conditioning system in which the compressor is mounted in front of the engine. Such a figure shows how the exchanger-silencer assembly 12 may be mounted instead of the silencer normally used in this type of systems and indicated by reference number 51.

The fluidic assembly 50 will be described hereinafter so that the reference numbers used in the previous description indicate like elements or elements corresponding to those previously described.

In particular, the fluidic assembly 50 comprises the high pressure line 2, in which fitting 4 is connected to the compressor delivery and fitting 8 is connected to the expansion valve inlet, and the low pressure line 3 in which fitting 10 is connected to the outlet of the evaporator and fitting 11 is connected to the compressor suction.

In particular, the high pressure line 2 comprises the pipe 6 connected between the condenser outlet and the expansion valve. The low pressure line 3 comprises the pipe 9 connected between the evaporator and the compressor to feed refrigerating liquid in the gaseous state at low pressure and low temperature.

According to the configuration shown in figure 5, the pipes 6 and 9 are arranged side-by-side and the exchanger-silencer assembly 12 is mounted over the length in which the pipes 6 and 9 are close to each other.

Furthermore, instead of gluing, laser welding technology may be used to made the exchanger 1, as mentioned above. Thereby, the heat supply is localized in a particularly precise manner with respect to other welding techniques so as to prevent high deformations and distortions and to preserve the crystalline structure of the zones adjacent to the welding. For example, laser welding may be used for joining at least one of the pipes 6, 9 to the casing 16. Furthermore, the casing 16 may also be made in more than two parts and at least two of these parts may be welded together by means of laser technology.

## Claims

1. A fluidic assembly for an air conditioning circuit, comprising a first feeding line (2) for a high temperature fluid, a second feeding line (3) for a refrigerating fluid in the gaseous state, and a casing (16) defining a first inlet (24) and a first outlet (25) connected to said second line (3); a chamber (31) having an elongated shape and a minimum upper cross dimension as compared to said first inlet and first outlet (24, 25); a second inlet (22) and a second outlet (23) connected to said first line (2); said fluidic assembly comprising a radiating body (26) adapted to be crossed by the high temperature fluid and fluid-tightly connected to said casing (16) between said second inlet and second outlet (22, 23) within said chamber (31) for defining an integrated silencer-exchanger assembly (12), **characterized in that** said first and second lines (2, 3) are connected to said casing (16) by means of two flanges (17, 19).

2. A fluidic assembly according to claim 1, **characterized in that** said casing comprises a pair of shells (14, 15).

3. A fluidic assembly according to any one of the preceding claims, **characterized in that** said casing (16) has a side wall having substantially rectilinear generatrices and a cross section having a larger dimension and a smaller dimension different from said larger dimension.

4. A fluidic assembly according to any one of the preceding claims, **characterized in that** said radiating body (26) comprises a tube (27) having a longer length than said casing (16).

5. A fluidic assembly according to any one of the preceding claims, **characterized in that** said radiating body (26) comprises radial ridges (36) for increasing the heat exchange surface.

6. A fluidic assembly according to any one of the preceding claims, **characterized in that** it comprises at least one partition (40) adapted to intercept the flow of said refrigerating fluid within said chamber (31).

7. A fluidic assembly according to any one of the preceding claims, **characterized in that** said second line (3) comprises an inlet pipe (32) and an outlet pipe (33) connected to said casing (16) and **in that** said inlet and outlet pipes (32, 33) are misaligned.

8. A fluidic assembly according to any one of the preceding claims, **characterized in that** at least one of said flanges (17; 19) has a side opening such as to be mounted after said first and second lines (2, 3) have been fluidically connected to said casing (16).

9. A fluidic assembly according to any one of the preceding claims, **characterized in that** it comprises a front seal (35) between said casing (16) and an upsetting part (34) of said second line (3), and **in that** at least one of said flanges (17; 19) defines a recess for accommodating at least said upsetting part (34) so that said flange (17; 19) is mounted substantially flat.

10. A fluidic assembly according to any one of the preceding claims, **characterized in that** at least said radiating body (26) is glued to said casing (16).

11. A fluidic assembly according to any one of the claims from 1 to 9, **characterized in that** at least said radiating body (26) is laser-welded to said casing (16).

12. An air conditioning system for a motor vehicle comprising a compressor, an evaporator and a condenser, **characterized in that** it comprises a fluidic assembly according to any one of the preceding claims for connecting said compressor, condenser and evaporator to one another.

13. A motor vehicle comprising an engine compartment and a fire-wall (13) delimiting said engine compartment, **characterized in that** it comprises an air conditioning system according to claim 11, wherein said exchanger-silencer assembly (12) is applied to said fire-wall (13).

## Patentansprüche

1. Fluidanordnung für einen Luftklimatisierungskreislauf, umfassend eine erste Einspeiseleitung (2) für ein Hochtemperaturfluid, eine zweite Einspeiseleitung (3) für ein Kühlungsfluid im Gaszustand und ein Gehäuse (16) definierend einen ersten Einlass (24) und einen ersten Auslass (25) verbunden mit der zweiten Einspeiseleitung (3); eine Kammer (31) von einer gestreckten Gestalt und mit einer minimalen oberen Quererstreckung im Verhältnis zum ersten Einlass und zum ersten Auslass (24, 25); einen zweiten Einlass (22) und einen zweiten Auslass (23) verbunden mit der ersten Einspeiseleitung (2); die Fluidanordnung umfassend einen Radiator (26) geeignet, durch das Hochtemperaturfluid überquert zu werden, und fluiddicht verbunden mit dem Gehäuse (16) zwischen dem zweiten Einlass und dem zweiten Auslass (22, 23) innerhalb der Kammer (31) zu einer Definition einer integrierten Geräuschdämpfer-Austauscher-Anordnung (12), **dadurch gekennzeichnet, dass** die erste Einspeiseleitung und die zweite Einspeiseleitung (2, 3) mit dem Gehäuse (16) mittels zweier Flansche (17, 19) verbunden sind.

2. Fluidanordnung gemäß Anspruch 1, **dadurch gekennzeichnet, dass** das Gehäuse ein Paar von Hüllen (14, 15) umfasst.

3. Fluidanordnung gemäß einem beliebigen der vorhergehenden Ansprüche, **dadurch gekennzeichnet, dass** das Gehäuse (16) eine Seitenwand mit einer im Wesentlichen gradlinigen Mantellinie und einen Querschnitt mit einer größeren Erstreckung und einer kleineren Erstreckung, welche von der größeren Erstreckung verschieden ist, umfasst.

4. Fluidanordnung gemäß einem beliebigen der vorhergehenden Ansprüche, **dadurch gekennzeichnet, dass** der Radiator (26) ein Röhre (27) mit einer längeren Länge als das Gehäuse (16) umfasst.

5. Fluidanordnung gemäß einem beliebigen der vorhergehenden Ansprüche, **dadurch gekennzeichnet, dass** der Radiator (26) radiale Rippen (36) zu einer Vergrößerung der Wärmeaustauschoberfläche umfasst.

6. Fluidanordnung gemäß einem beliebigen der vorhergehenden Ansprüche, **dadurch gekennzeichnet, dass** sie wenigstens eine Abteilung (40) geeignet zu einer Unterbrechung des Flusses des Kühlungsfluides innerhalb der Kammer (31) umfasst.

7. Fluidanordnung gemäß einem beliebigen der vorhergehenden Ansprüche, **dadurch gekennzeichnet, dass** die zweite Einspeiseleitung (3) ein Einlassrohr (32) und ein Auslaussrohr (33), verbunden mit dem Gehäuse (16), umfasst, und dadurch, dass das ,Einlassrohr und das Auslassrohr (32, 33) zueinander versetzt sind.

8. Fluidanordnung gemäß einem beliebigen der vorhergehenden Ansprüche, **dadurch gekennzeichnet, dass** wenigstens einer der Flansche (17; 19) eine Seitenöffnung aufweist zu einer Montage, nachdem die erste Einspeiseleitung und die zweite Einspeiseleitung (2, 3) mit dem Gehäuse (16) fluidverbunden worden sind.

9. Fluidanordnung gemäß einem beliebigen der vorhergehenden Ansprüche, **dadurch gekennzeichnet, dass** sie eine Frontabdichtung (35) zwischen dem Gehäuse (16) und einem Stauchpart (34) der zweiten Einspeiseleitung (3) aufweist, und dadurch, dass wenigstens einer der Flansche (17; 19) einen Einschnitt zu einer Aufnahme wenigstens des Stauchparts (34) definiert, so dass der Flansch (17; 19) im Wesentlichen flach montiert wird.

10. Fluidanordnung gemäß einem beliebigen der vorhergehenden Ansprüche, **dadurch gekennzeichnet, dass** wenigstens der Radiator (26) an das Gehäuse (16) geklebt ist.

11. Fluidanordnung gemäß einem beliebigen der Ansprüche 1 bis 9, **dadurch gekennzeichnet, dass** wenigstens der Radiator (26) an das Gehäuse (16) lasergeschweißt ist.

12. Luftklimatisierungssystem für ein Kraftfahrzeug, umfassend einen Kompressor, einen Verdunster und einen Verflüssiger, **dadurch gekennzeichnet, dass** es eine Fluidanordnung gemäß einem beliebigen der vorhergehenden Ansprüche zu einer Verbindung des Kompressors, des Verflüssigers und des Verdunsters miteinander umfasst.

13. Kraftfahrzeug, umfassend einen Motorraum und eine Brandwand (13), welche den Motorraum eingrenzt, **dadurch gekennzeichnet, dass** es ein Luftklimatisierungssystem gemäß Anspruch 11 umfasst, wobei die Austauscher-Geräuschdämpfer-Anordnung (12) an der Brandwand (13) aufgebracht ist.

## Revendications

1. Ensemble fluidique pour un circuit de climatisation, comprenant une première conduite d'alimentation (2) pour un fluide à haute température, une seconde conduite d'alimentation (3) pour un fluide réfrigérant à l'état gazeux et un boîtier (16) définissant une première entrée (24) et une première sortie (25) raccordées à la seconde conduite (3) ; une chambre (31) ayant une forme allongée et une dimension transversale supérieure minimale par rapport auxdites première entrée et première sortie (24, 25) ; une seconde entrée (22) et une seconde sortie (23) raccordées à ladite première conduite (2), ledit ensemble fluidique comprenant un corps rayonnant (26) adapté pour être traversé par le fluide à haute température et raccordé audit boîtier (16) de manière étanche aux fluides, entre lesdites seconde entrée et seconde sortie (22, 23) à l'intérieur de ladite chambre (31) pour définir un ensemble de type silencieux-échangeur intégré (12) ; **caractérisé en ce que** lesdites première et seconde conduites (2, 3) sont raccordées audit boîtier (16) à l'aide de deux brides (17, 19).

2. Ensemble fluidique selon la revendication 1, **caractérisé en ce que** ledit boîtier comprend une paire d'enveloppes (14, 15).

3. Ensemble fluidique selon l'une quelconque des revendications précédentes, **caractérisé en ce que** ledit boîtier (16) a une paroi latérale ayant des génératrices sensiblement rectilignes et une section transverse ayant une dimension supérieure et une dimension inférieure différente de la dimension supérieure.

4. Ensemble fluidique selon l'une quelconque des revendications précédentes, **caractérisé en ce que** ledit corps rayonnant (26) comprend un tube (27) ayant une longueur supérieure au boîtier (16).

5. Ensemble fluidique selon l'une quelconque des revendications précédentes, **caractérisé en ce que** ledit corps rayonnant (26) comprend des nervures radiales (36) pour augmenter la surface d'échange thermique.

6. Ensemble fluidique selon l'une quelconque des revendications précédentes, **caractérisé en ce qu'**il comprend au moins une séparation (40) adaptée pour intercepter l'écoulement dudit fluide réfrigérant dans ladite chambre (31).

7. Ensemble fluidique selon l'une quelconque des revendications précédentes, **caractérisé en ce que** ladite seconde conduite (3) comprend un tuyau d'entrée (32) et tuyau de sortie (33) raccordés audit boîtier (16) et **en ce que** lesdits tuyaux d'entrée et de sortie (32, 33) ne sont pas alignés.

8. Ensemble fluidique selon l'une quelconque des revendications précédentes, **caractérisé en ce qu'**au moins une des brides (17, 19) a une ouverture latérale pour pouvoir être montée après que lesdites première et seconde conduites (2, 3) ont été raccordées de manière fluidique audit boîtier (16).

9. Ensemble fluidique selon l'une quelconque des revendications précédentes, **caractérisé en ce qu'**il comprend un joint d'étanchéité avant (35) disposé entre ledit boîtier (16) et une partie de renversement (34) de ladite seconde conduite (3) ; et **en ce qu'**au moins une des brides (17, 19) définit un évidement pour loger au moins ladite partie de renversement (34) de sorte que ladite bride (17, 19) soit montée de manière sensiblement aplatie.

10. Ensemble fluidique selon l'une quelconque des revendications précédentes, **caractérisé en ce qu'**au moins ledit corps rayonnant (26) est collé audit boîtier (16).

11. Ensemble fluidique selon l'une quelconque des revendications 1 à 9, **caractérisé en ce qu'**au moins ledit corps rayonnant (26) est soudé au laser sur ledit boîtier (16).

12. Système de climatisation pour un véhicule à moteur comprenant un compresseur, un dispositif d'évaporation et un dispositif de condensation, **caractérisé en ce qu'**il comprend un ensemble fluidique selon l'une quelconque des revendications précédentes pour raccorder lesdits compresseur, dispositif de condensation et dispositif d'évaporation l'un à l'autre.

13. Véhicule à moteur comprenant un compartiment moteur et une cloison pare-feu (13) délimitant ledit compartiment moteur, **caractérisé en ce qu'**il comprend un système de climatisation selon la revendication 11, dans lequel ledit ensemble de type échangeur-silencieux (12) est appliqué sur ladite cloison pare-feu (13).
